# EUROPEAN PATENT APPLICATION

(11) **EP 3 214 356 A1**
(43) Date of publication of application: **06.09.2017**
(21) Application number: 16158213.5
(22) Date of filing: 02.03.2016
(51) Int. Cl.: F17C 7/00, F17C 13/08

(54) **GAS SUPPLY SYSTEM IN A VESSEL**

(71) Applicant: BV Scheepswerf Damen Gorinchem, 4200 AA Gorinchem (NL)
(72) Inventor: Dukers, Emile Christian Jozef August, 3171 PR Poortugaal (NL); Watson, Raymond Frits Albert, 1501 SC Zaandam (NL)
(74) Representative: De Vries & Metman

(57) **Abstract**

The invention concerns a gas supply system in a vessel with a combustion engine, the gas supply system comprises a gas source for storing gas at a first pressure and gas lines that have inner walls that enclose the gas and the gas lines connect the gas source to the combustion engine.

In accordance with the invention the gas lines comprise outer walls that surround the inner walls and between the inner walls and the outer walls is at least one gas-tight buffer space filled with a fluid with a second pressure, and a pressure sensor and a signaling device connected to the pressure sensor for generating signals when the pressure sensor detects changes in the second pressure to values that are above and/or below set values and/or the pressure sensor detects a second pressure changing rate that is higher than a set changing rate.

## Description

The invention concerns a gas supply system in a vessel with a combustion engine, the gas supply system comprises a gas source for storing gas at a first pressure and pressurized gas lines that have inner walls that enclose the gas at the first pressure and the pressurized gas lines connect the gas source to the combustion engine.

In known gas supply systems in a vessel the gas lines have inner walls that are installed within a ventilated pipe or duct. The air space between the inner wall of the gas fuel piping and the wall of the outer pipe or duct is equipped with mechanical under-pressure ventilation having a capacity of at least 10-30 air changes per hour. The ventilation outlet is covered by a protection screen and the ventilation outlet is placed in a position where no flammable gas-air mixture may be ignited. Often such a ventilation outlet is undesirable as this ventilation outlet may not be brought near positions where flammable gas-air mixtures may be ignited. This limits the use of the vessel and it is desirable to improve the operational use of the vessel.

In order to overcome this disadvantage the pressurized gas lines comprise outer walls that surround the inner walls and between the inner walls and the outer walls is at least one gas-tight buffer space filled with a fluid such as inert gas or a liquid with a second pressure that is higher than the ambient pressure and lower than the first pressure, and the gas supply system further comprises a pressure sensor for detecting the second pressure in each gas-tight buffer space and a signaling device connected to the pressure sensor for generating signals when the pressure sensor detects changes in the second pressure to values that are above and/or below set values and/or the pressure sensor detects a second pressure changing rate that is higher than a set changing rate.

In this way the signaling device can give a warning or initiate action when there is leakage from the gas line enclosed by the inner walls to the gas-tight buffer space or when there is leakage from the gas-tight buffer space to the ambient air. Depending where the leakage occurs, appropriate action can be taken to prevent dangerous situations as a result of leakage. Also the operations in which the vessel is involved can be taken into account.

In accordance with an embodiment, the gas-tight buffer space comprises separate buffer space sections around separate inner wall sections and the separate buffer space sections have separate pressure sensors connected to the signaling device. In this way, it is possible to determine the location, which means in which specific gas-tight buffer space, the leakage occurs. This makes appropriate action possible to reduce the danger of the leakage while maintaining the vessel in operation as much as possible.

In accordance with an embodiment, the inner wall comprises a cooling section and a gas-tight cooling space surrounds the cooling section, cooling fluid fills the gas-tight cooling space at a cooling fluid pressure and a pressure sensor connected to the signaling device detects the cooling fluid pressure. In this way it is possible to combine the leakage detection with the cooling of the natural gas flowing through the inner walls.

Hereafter the invention is explained with the aid of several embodiments of a ship with the aid of a drawing. In the drawing
Figure 1 shows a top view of a ship according to the invention,
Figure 2 shows a side view of a ship according to the invention,
Figure 3 shows a schematic view of the gas supply system of the ship of figures 1 and 2, and
Figure 4 shows in cross section two embodiments of the connecting end of a pressure vessel mounted in the ship according to the invention.

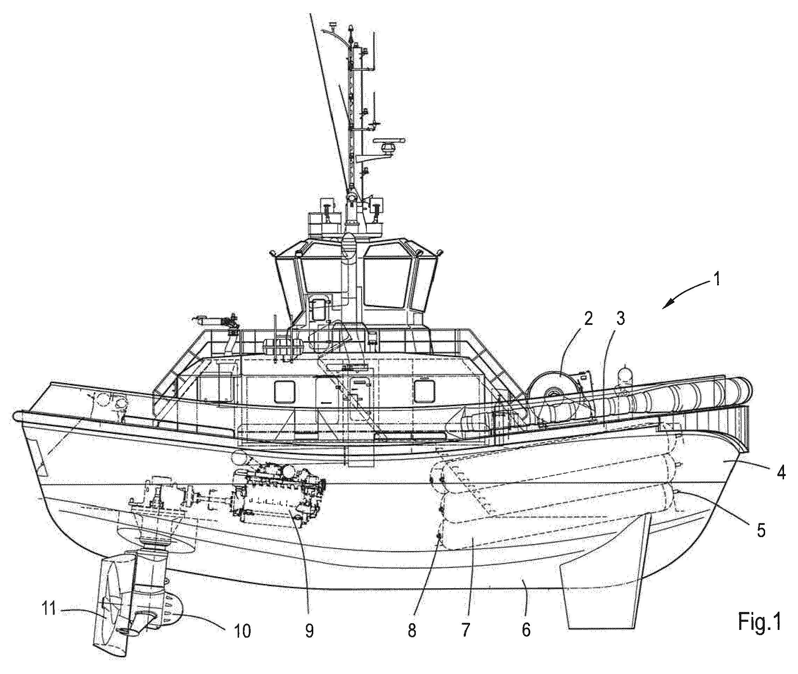

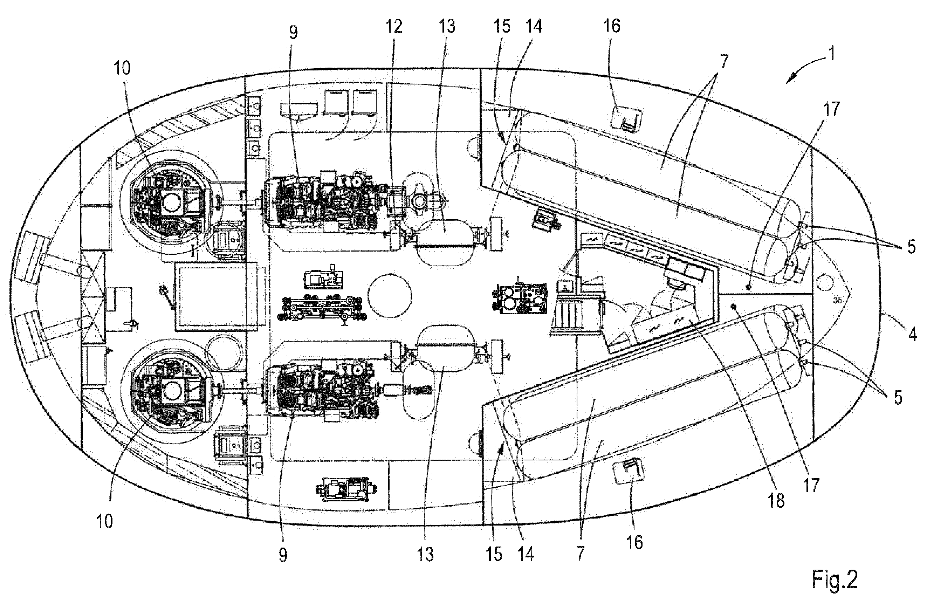

The ship shown in figures 1, 2 and 3 is a tug 1 suitable for assisting larger ships when entering or leaving a harbor or when mooring. The tug 1 has a hull 6 with a bow 4 and a fore deck 3 and on the fore deck 3 a winch 2. The winch 2 is used for winding a cable (not shown) that can be connected to the larger ships. The tug 1 is powered by two engines 9 and each engine 9 drives an azimuting propulsion drive 10 that has a propeller 11. The engines 9 use natural gas as fuel, the natural gas is stored as compressed gas in pressure vessels 7 that are mounted in tank storage rooms 17 at starboard and port under the fore deck 3. The fore deck 3 is the uppermost watertight deck in the hull 6 so that the pressure vessels 7 are inside a watertight area of hull 6.

In other embodiments of a ship according to the invention the propulsion of the ship is different, for instance water jets can be used for the propulsion and/or gas turbines are used as engines. Also the number of engines can be only one or more than three.

The tank storage rooms 17 are accessible through entrance openings 16 and have an open connection with the ambient air or are ventilated to prevent pressure build up. At one end the pressure vessel 7 has a mounting flange 8 that is gas-tight mounted against a separation wall 15, the separation wall 15 separates the tank storage room 17 and a tank connection space 14. At the other end the pressure vessel 7 has a support shaft 5 that is mounted in a support (not shown). The support shaft 5 and the support together form a bearing that is designed to support the pressure vessel 7 and that can accommodate the longitudinal length change of the pressure vessel 7 caused by the different gas pressures when it is filled with natural gas of high pressure: the gas pressure in the pressure vessels may change during filling from 20 bar to 250 bar, or during filling even to 310 bar. The mounting flange 8 and the bearing prevent sideway or vertical movements of the pressure vessel 7 relative to the tug 1 when waves or other external forces cause the tug 1 to move jerkily.

The pressure vessels 7 are made from composite material that have an increase in length of for instance 0.03 meter at high pressure. In other embodiments there are steel pressure vessels 7 that might show a different increase in length. The bearing comprises a support shaft 5 that slides in a longitudinal bearing. In other embodiments, the longitudinal expansion can be accommodated in a bearing that comprises connecting rods that form a linkage. The four pressure vessels 7 mounted in each tank storage room 17 each have a storage volume of 6 m³. The pressure vessels 7, the gas lines and valves are designed for compressed natural gas (CNG). It will be clear that in other embodiments they might be made suitable for other gasses that can be used as fuel for engines, such as hydrogen or methane (originated from other sources than natural gas).

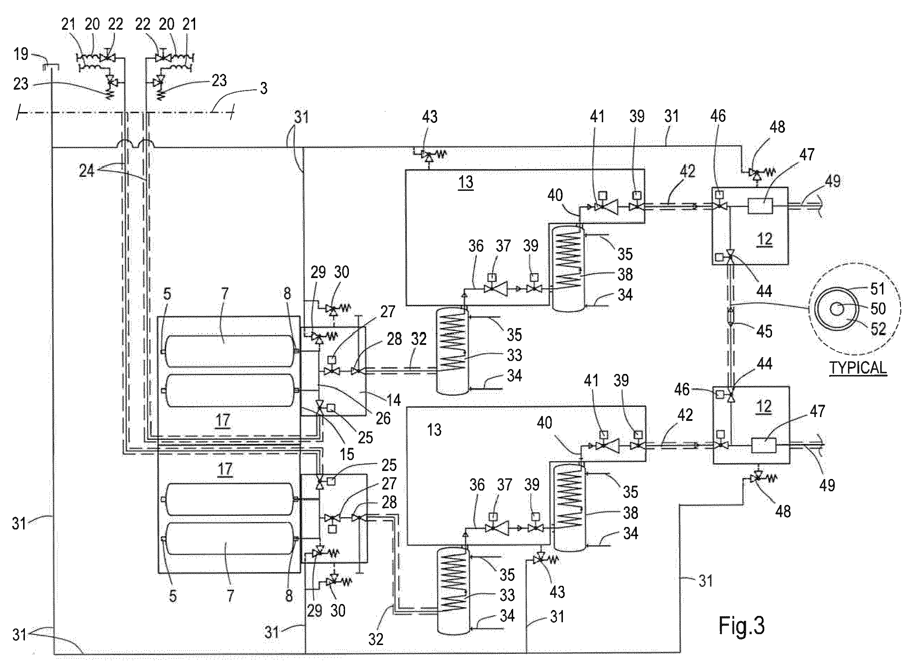

A gas supply system that comprises gas lines connects the pressure vessels 7 via the tank connection space 14, a gas conditioning space 13 and a gas regulating room 12 with the engine 9. The gas supply system with for each engine 9 a separate gas supply system is explained in more detail with the aid of figure 3. The operation of the gas supply system is controlled by a control system that comprises a control panel 18 and that is operated by the ship's operator. The control system comprises a safety control system and sensors to monitor inter alia gas pressures, gas temperatures and engine related information. Figure 3 shows the gas supply system and several safety related features.

In order to avoid dangerous situations, the various fittings such as valves and pressure regulators are located in gas-tight spaces, such as the tank connection space 14, the gas conditioning space 13 and the gas regulating room 12. These gas-tight spaces 12, 13, 14 are filled with an inert gas and in the gas-tight spaces are sensors (not shown) to monitor the gas pressure in these gas-tight spaces 12, 13, 14. If the gas pressure in one of the gas-tight spaces 12, 13, 14 increases or increases at a too high rate or decreases possibly at a too high rate, the safety control system will try to identify the cause, it will for instance determine that there is a leakage and identify the location of the leakage. After identifying the leakage location and possibly the leakage cause and the operational situation of the tug 1 the safety control system warns the operator and closes one or more remote controlled stop valves, that are specified hereafter, so that the gas supply to specific sections of the gas lines is stopped. The remote controlled stop valves are quick acting and close the flow of gas for instance in less than 0.2 second or in less than 0.1 second.

As the sections of the gas lines may contain gas at high pressure, leakage might continue for a short time and the gas pressure in the gas-tight space might increase further. When the gas pressure in a gas-tight space 12, 13, 14 increases above a safety level, a safety valve opens and the mixture of inert gas and natural gas flows to the ambient air through a blow off line 31 and a blow off outlet 19 that is located outside the hull 6 and above the fore deck 3. In other embodiments the blow off outlet 19 is at the side of the hull 6 or located high above the tug 1, for instance high above engine exhaust outlets in a mast. The location of the blow off outlet 19 is chosen so that the gas flows outside the hull 6 and no flammable gas-air mixture may be ignited.

Sections of the gas lines located outside the gas-tight spaces 12, 13, 14 and connecting the gas lines and valves in the gas-tight spaces 12, 13, 14 are provided with an inner wall 50, indicated with a single line in figure 3, and an outer wall 51, in figure 3 indicated with two interrupted lines. Between the inner wall and the outer wall is a gas-tight buffer space 52. In figure 3 a cross section shows the inner wall 50, the outer wall 51 and the buffer space 52. The outer wall is designed such that the outer wall can withstand the same maximum pressure as the inner wall. The gas-tight buffer space 52 is filled with a fluid such as inert gas at a pressure that is higher than the pressure of the ambient air and lower than the pressure of the gas in the gas line. In other embodiments the buffer space 52 is filled with a liquid. A pressure sensor monitors the pressure of the fluid such as gas in the gas-tight buffer space 52. An increase of the pressure in the gas-tight buffer space 52 means leakage of the inner wall 50, a decrease of the pressure in the gas-tight buffer space means leakage of the outer wall 51. Depending on the location of the section of the gas line, the operational situation of the tug 1 and whether the leakage is in the outer wall 51 or the inner wall 50, the safety control system closes (and possibly opens) one or more remote control valves and warns the operator.

Figure 3 shows two gas supply systems, one on the starboard side of the tug 1 and one on the port side of the tug 1. Each gas supply system connects to one engine 9 and might be connected to both engines 9 via a backup line 45. In another embodiment with one engine both gas supply system can supply gas to the engine. In a further embodiment the two gas supply systems provide gas to three or more engines.

The flanges 8 of the pressure vessels 7, located at either starboard or port of the tug 1 in separate tank storage rooms 17, are gas-tight mounted on the separation wall 15 that is part of the gas-tight tank connection space 14. A connection assembly 26 connects the pressure vessels 7. A remote operated master valve 27 connects via a manually operated stop valve 28 the connecting assembly 26 with a first gas line section 32. The connecting assembly 26 couples via a remote controlled filling valve 25, the filling line 24 and a manual filling valve 22 with a flexible filling line 20. The flexible filling line 20 is during filling coupled to a source of compressed gas in a filling station (not shown). The manual filling valve 22 is located outside the hull 6 for instance immediately above the fore deck 3, which means that it is outside the watertight area of the hull 6.

The filling line 24 has an inner wall that is enclosed by an outer wall and between the inner wall and the outer wall is a buffer space that is connected via a filling safety valve 33 with a flexible relief line 21. There might be a sensor (not shown) for detecting the gas pressure in the buffer space and/or activating the safety control system. If leakage of the inner wall occurs the leaking gas flows through the flexible relief line 21 to the filling station.

In the shown embodiment, the connecting assembly 26 is coupled directly with the pressure vessels 7. In other embodiments there might be a manually or remote operated stop valve between a pressure vessel 7 and the connecting assembly, so that one or more pressure vessel (s) 7 can be isolated. This can be done for safety reasons or for maintaining reserve fuel in one or more of the pressure vessels 7.

In order to prevent overpressure in the connecting assembly 26, a main line safety valve 29 connects the connecting assembly 26 to the blow off line 31. In order to prevent overpressure in the tank connection space 14, a tank connection space safety valve 30 connects the tank connection space 14 with the blow off line.

The first gas line section 32 comprises an inner wall 50 and an outer wall 51 and a gas-tight buffer space 52 with a sensor for detecting leakage. The natural gas flows through the first gas line section 32 and through a first heat exchanger 33 to a second gas line section 36 in the gas-tight gas conditioning space 13. The heating fluid enters the first heat exchanger 33 through a heating fluid inlet 35 and leaves the first heat exchanger 33 through a heating fluid outlet 34. In the first heat exchanger 33 is a sensor (not shown) that detects the level of the heating fluid in the first heat exchanger 33, detecting the level of heating fluid makes it possible to determine gas leakage from the piping in the first heat exchanger 33.

The first heat exchanger 33 heats the natural gas before it flows through a first pressure reducing valve 37. In the first pressure reducing valve 37 the gas pressure is reduced from the pressure in the pressure vessels 7 to approximately 50 bar or the gas flows without reducing through the first pressure reducing valve 37 if the gas pressure in the pressure vessel 7 is lower than 50 bar. The temperature of natural gas gets colder when its pressure is reduced and heating before reducing its pressure prevents that the gas gets too cold.

After leaving the first pressure reducing valve 37 the gas flows via a remote controlled stop valve 39 out of the gas conditioning space 13 through a second heat exchanger 38 that is more or less similar to the first heat exchanger 33. After leaving the second heat exchanger 38 the gas flows through a third gas line section 40 also located in the gas conditioning space 13 through a second pressure reducing valve 41 and a remote controlled stop valve 39 to a fourth gas line section 42. The second pressure reducing valve 41 reduces the gas pressure to the level that is required by the engine 9, which is approximately 10 bar. The fourth gas line section 42 has an inner wall 50 and an outer wall 51 and a gas-tight buffer space 52 with a sensor for detecting pressure changes so that the safety control system might detect leakage and take appropriate action.

The gas conditioning space 13 is gas-tight and filled with pressurize inert gas. The pressure of the inert gas is monitored by a sensor and the safety control system can detect leakage of the gas lines and valves located in the gas conditioning space 13 and take the required measures to maintain a safe situation. In case overpressure occurs a conditioning space safety valve 43 allows the mixture of leaked gas and inert gas to blow off through the blow off line 31 to the blow off outlet 19.

The gas flowing through the fourth gas line section 42 flows via a remote controlled stop valve 46 to a gas regulating valve 47 and from there to a motor supply line 49. The motor supply line 49 is coupled to the engine 9 and the gas regulating valve 47 determines the gas supply to the engine. A motor control system and/or the operator determines the setting of the gas regulating valve 47. The remote controlled stop valve 46 and the gas regulating valve 47 are located in the gas-tight gas regulating room 12 that is filled with inert gas. Also in the gas regulating room 12 is a backup connecting valve 44 that connects via a backup line 45 the gas supply to the gas regulating valve 47 of one of the engines 9 to the gas regulating valve 47 of the other engine 9. By closing one of the remote controlled valves 46 and opening both backup connecting valves 44 one gas supply system supplies the natural gas to both engines 9 so that both engines 9 remain in operation when one of the gas supply at one side of the tug 1 has to be switched off.

The gas regulating room 12 has a regulating room safety valve 48 connected to the blow off line 31 to prevent overpressure in the gas regulating room 12. The backup line 45 has an inner wall 50 and an outer wall 51 and a gas-tight buffer space 52 filled with inert gas whereby a sensor detects the pressure of the inert gas to detect a leakage in the inner wall 50 or the outer wall 51. In case of a leakage the safety control system initiates action to prevent dangerous situations.

As indicated above, the gas supply system includes many sensors that are monitored by the control system including the safety control system and many remote controlled valves to ensure safe operation. It will be obvious that the operator and the operating conditions have a major influence on the various actions that are taken. On the one hand it must be prevented that dangerous quantities of natural gas leak into the watertight area inside the hull 6 of the tug 1, on the other hand it is important that during operation the engines 9 remain under power to prevent that the tug 1 or the larger ship that the tug 1 assists come to damage.

The gas supply system shown in figure 3 has pressure vessels 7 with compressed gas as gas source. A similar gas supply system can be used with liquefied gas stored in cooled storage vessels as gas source. This means that the same gas lines, valves and safety system for the gas transport through the gas lines can also be used for supplying engines in ships or other vessels with a LNG gas supply. In case of LNG gas supply the gas lines may be partly filled with liquid, in that situation the same safety measures apply to prevent gas leakage into the watertight area of the hull.

The gas supply system is described as embodiment on a tug 1 to supply gas to an engine that drives the propulsion of the tug 1. In another embodiment the gas supply is for an engine on a vessel such as a barge, whereby the engine is used for power generation or for other purposes. In those types of vessels for safety reasons the leakage of gas into the watertight area of the hull must be prevented as well and the same safety control measures are required.

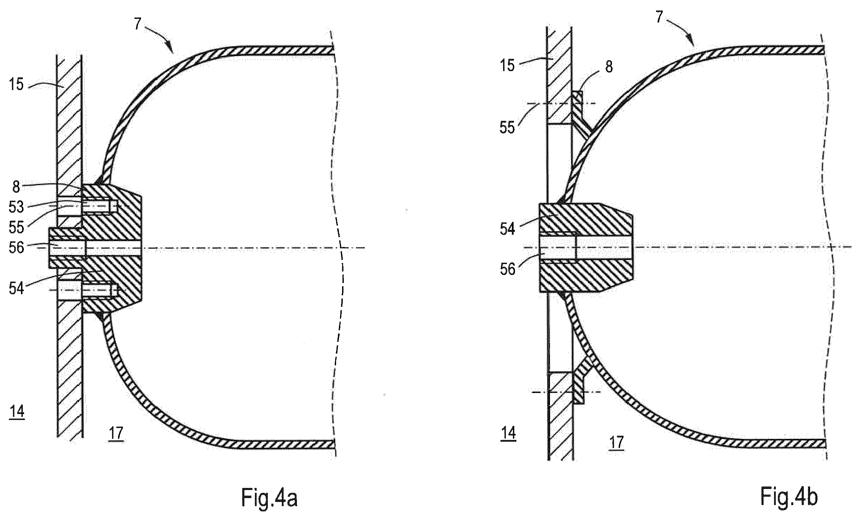

Figure 4 shows two embodiments of the fixing means for gas-tight fixing the pressure vessels 7 on the separation wall 15. Figure 4a shows the first embodiment whereby the pressure vessel 7 has an end boss 54 with a gas connection 56 and the end boss 54 is provided with threaded holes 53 with centerlines 55. In this embodiment the end boss 54 is also the flange 8 that is mounted in the separation wall 15. Figure 4b shows the second embodiment whereby the end boss 54 of the pressure vessel 7 projects through an opening in the separation wall 15 and a separate flange 8, that is fixed to the connection end of the pressure vessel 7 and that is bolted gas-tight on the separation wall 15.

## Claims

1. Gas supply system in a vessel with a combustion engine, the gas supply system comprises a gas source for storing gas at a first pressure and pressurized gas lines that have inner walls that enclose the gas at the first pressure and the pressurized gas lines connect the gas source to the combustion engine, **characterized in that** the pressurized gas lines comprise outer walls that surround the inner walls and between the inner walls and the outer walls is at least one gas-tight buffer space filled with a fluid such as inert gas or a liquid with a second pressure that is higher than the ambient pressure and lower than the first pressure, and the gas supply system further comprises a pressure sensor for detecting the second pressure in each gas-tight buffer space and a signaling device connected to the pressure sensor for generating signals when the pressure sensor detects changes in the second pressure to values that are above and/or below set values and/or the pressure sensor detects a second pressure changing rate that is higher than a set changing rate.

2. Gas supply system in accordance with claim 1 wherein the gas-tight buffer space comprises separate buffer space sections around separate inner wall sections and the separate buffer space sections have separate pressure sensors connected to the signaling device.

3. Gas supply system in accordance with claim 1 or 2 wherein the inner wall comprises a cooling section and a gas-tight cooling space surrounds the cooling section, cooling fluid fills the gas-tight cooling space at a cooling fluid pressure and a pressure sensor connected to the signaling device detects the cooling fluid pressure.
